(19) **Europäisches Patentamt / European Patent Office / Office européen des brevets**

(11) **EP 4 581 327 B1**

(12) **FASCICULE DE BREVET EUROPEEN**

(45) Date de publication et mention
de la délivrance du brevet:
**22.04.2026 Bulletin 2026/17**

(21) Numéro de dépôt: **23761866.5**

(22) Date de dépôt: **24.08.2023**

(51) Classification Internationale des Brevets (IPC):
**F41H 5/04** *(2006.01)*

(52) Classification Coopérative des Brevets (CPC):
**F41H 5/0435; F41H 5/0485**

(86) Numéro de dépôt international:
**PCT/EP2023/073287**

(87) Numéro de publication internationale:
**WO 2024/046872 (07.03.2024 Gazette 2024/10)**

(54) **PLAQUE DE DISSIPATION D'ENERGIE POUR BLINDAGE COMPRENANT UN MATERIAU D'AMORTISSEMENT FIBREUX ET POREUX**

ENERGIEABSCHWÄCHENDE PANZERPLATTE MIT EINEM FASERFÖRMIGEN UND PORÖSEN DÄMPFUNGSMATERIAL

ENERGY-DISSIPATING PLATE FOR ARMOUR, COMPRISING A FIBROUS AND POROUS DAMPING MATERIAL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.09.2022 FR 2208777**

(43) Date de publication de la demande:
**09.07.2025 Bulletin 2025/28**

(73) Titulaire: **SAINT-GOBAIN CENTRE DE RECHERCHES ET D'ETUDES EUROPEEN**
**92400 Courbevoie (FR)**

(72) Inventeurs:
• **MARGOSSIAN, Alexane**
**84306 Cavaillon Cedex (FR)**
• **HIS, Christian**
**84306 Cavaillon Cedex (FR)**
• **TEULERE, Coralie**
**93300 Aubervilliers (FR)**
• **BOUCHARD, Jonas**
**92400 Courbevoie (FR)**

(74) Mandataire: **Saint-Gobain Recherche**
**41 Quai Lucien Lefranc**
**93300 Aubervilliers (FR)**

(56) Documents cités:
WO-A2-91/08895          GB-A- 2 571 291
US-A1- 2019 025 015

**Description**

L'invention concerne un dispositif de protection antibalistique, en particulier un dispositif de protection personnel, (par exemple gilet pare-balles), un dispositif de protection d'un véhicule (terrestre, maritime ou aérien) ou encore une installation fixe (bâtiment, mur d'enceinte, poste de garde notamment), ou encore un équipement de détection ou de communication, par exemple un radôme. L'invention concerne plus particulièrement une plaque de dissipation de l'énergie pour blindage comprenant un matériau d'amortissement, y compris le matériau lui-même. Une telle plaque permet de stopper en particulier une balle ou un projectile tiré par une arme, notamment une arme à feu.

L'invention se rapporte également à une plaque de blindage comprenant ladite plaque de dissipation de l'énergie et une plaque anti-impact, en un matériau dur, placée devant ladite plaque de dissipation par rapport à la direction de la menace ou du projectile. Une telle réalisation est notamment adaptée pour renforcer la protection lorsque ledit projectile est très perforant.

Parmi les matériaux de protection antibalistique, on connait par exemple de US2013220106A1 le Dyneema® HB26 qui est un composite comprenant plusieurs couches de fibres de polyéthylènes ultra haute densité (UHMWPE) mono-orientées lesdites couches étant disposées perpendiculairement d'une couche à l'autre dans une matrice de polyuréthane. Ce matériau serait utilisé pour la protection contre une munition employée par un fusil d'assaut comme l'AK47 ou le choc de bombes artisanales en distribuant l'énergie d'impact. Une protection balistique est aussi connue de WO 91/08895 A2.

Dans le but de réduire la masse des dispositifs de protection sans pénaliser la performance antibalistique, de nombreux matériaux ont été proposés pour constituer une armure destinée aux personnes dont le rapport masse de blindage sur surface de protection doit rester faible, typiquement moins de 50 kg/m$^2$, ou un blindage non personnel destiné à des véhicules ou des installations fixes dont le rapport masse sur surface de protection est généralement supérieur à 20 kg/m$^2$. Parmi les matériaux céramiques utilisés en particulier dans une telle application figurent les produits à base de carbure métallique. La publication WO 2013/186453 A1 décrit par exemple un produit de carbure de silicium (SiC) dont la forme des grains et la composition chimique sont spécifiées afin de constituer une armure ou un élément de blindage anti-impact. La publication EP1710218A1 dévoile un matériau fritté à base de nitrure de silicium et de carbure de tungstène avec l'aide d'additifs tels que des terres rares, du tungstène ajouté de préférence sous forme oxydée. WO2008/130451 (EP2095055A1) a également proposé une approche consistant à réduire la propagation de la vague de contraintes liée à l'impact du projectile en utilisant une enveloppe formée cette fois-ci par un média perméable, typiquement une couche de fibres organiques (par exemple aramide) fixée sur la pièce en céramique puis imprégnée par un polymère hyperélastique afin d'absorber l'énergie liée à l'impact du projectile et réduire la propagation de fissures et la multifracturation de la céramique.

Il existe cependant continuellement un besoin d'amélioration des dispositifs de protection antibalistique, cette amélioration étant mesurée notamment par leur performance balistique au regard de leur masse, en particulier de manière à pouvoir résister à la déformation dynamique du fait de l'impact balistique sans augmenter leur masse, voire en la réduisant, en particulier afin d'améliorer le confort en cas de protection personnelle ou de réduire la consommation d'énergie en cas de protection de véhicules.

L'objet de la présente invention est donc de proposer une plaque de blindage antibalistique dont les performances sont améliorées, en particulier dont la résistance à la déformation dynamique est améliorée, pour une même densité surfacique. Une telle amélioration résulte en particulier de l'utilisation de la plaque constituée du matériau d'amortissement selon l'invention, telle que décrite ci-dessous.

Selon un premier aspect général, la présente invention se rapporte à une plaque de dissipation de l'énergie d'impact pour blindage antibalistique, ladite plaque de dissipation étant constituée d'un matériau d'amortissement constitué d'un renfort fibreux lié par une matrice organique, ledit renfort comprenant des fibres inorganiques, assemblées sous forme de fils, de préférence des fils longs, ladite matrice comprenant une résine thermodurcissable enrobant lesdits fils, ledit matériau d'amortissement présentant les caractéristiques suivantes :

- le taux volumique de renfort fibreux dudit matériau d'amortissement est compris entre 20% et 70%, le complément à 100% étant constitué par ladite matrice et la porosité dudit matériau;
- ledit renfort fibreux comprend au moins 50% en volume de fils de fibres de silice dont la teneur massique en SiO$_2$ est supérieure à 90%,
- la porosité dudit matériau d'amortissement est comprise entre 2% et 10% en volume.

Les inventeurs ont en effet découvert qu'un tel matériau d'amortissement sous forme d'un composite de porosité contrôlée comprenant une matrice organique enrobant un renfort comprenant des fils dont la teneur en silice est élevée présente par rapport aux matériaux de l'état de la technique une résistance à la déformation dynamique améliorée, à même densité surfacique.

En particulier, une plaque de blindage munie d'un tel matériau d'amortissement montre une profondeur de déformation plus faible et une surface latérale de déformation plus grande, ce qui, à masse équivalente, se traduit par une plus grande aptitude à absorber l'énergie du fait de l'impact par exemple d'un projectile tiré par une arme à feu.

On décrit ci-après différents modes de réalisation préférés de la présente invention, qui peuvent bien évidemment, le cas échéant, être combinés entre eux :

- la masse volumique apparente du matériau d'amortissement est supérieure à 1,0 g/cm$^3$, de préférence supérieure à 1,5 g/cm$^3$ et/ou inférieure à 2,0 g/cm$^3$, de préférence inférieure à 1,8 g/cm$^3$;
- le taux volumique de renfort fibreux dudit matériau d'amortissement est compris entre 30 et 50%, le reste consistant en la porosité et la matrice.
- le renfort fibreux comprend en volume au moins 70% de fils de fibres de silice, de préférence au moins 80%, de préférence plus de 90% de fils de fibres de silice, de préférence est constitué essentiellement de fils de fibres de silice, appelés par la suite fils de silice par souci de simplicité ;
- le complément en volume d'au moins 50% desdits fils de silice du renfort fibreux est représenté par des fibres de verre lavé.
- la teneur massique en SiO$_2$ desdits fils de silice est supérieure 95%, de préférence supérieure à 97%, de manière plus préférée d'au moins 99% ;
- le diamètre équivalent moyen desdits fils est compris entre 3 et 3000 micromètres, de préférence supérieur à 8 micromètres et/ou inférieur à 1000 micromètres, de préférence inférieur à 500 micromètres ;
- les fils sont de préférence des fils simples ;
- la masse linéique desdits fils est supérieure ou égale à 500 tex, de préférence inférieure à 5000 tex ;
- le diamètre équivalent moyen des fibres de silice constituant les fils est supérieur ou égal à 3 micromètres, de préférence est supérieur ou égal à 5 micromètres, de préférence encore est supérieur ou égal à 7 micromètres
- le diamètre équivalent moyen desdites fibres est inférieur ou égal à 20 micromètres ;
- le renfort est constitué essentiellement desdits fils de silice ou même est constitué desdits fils de silice ;
- le niveau de torsion des fils est en moyenne inférieur ou égal à Z20, de préférence inférieur ou égal à Z10, de préférence inférieur ou égal à Z3 ;
- ledit renfort fibreux présente la forme d'au moins un pli ou une couche d'un textile, de préférence d'un tissu, constitué d'un réseau de fils de chaîne parallèles, avec de préférence des fils de trame traversant transversalement, de préférence perpendiculairement, ledit réseau. Selon un mode possible, le renfort est constitué de plusieurs couches superposées de tissus, chaque couche étant imprégnée de résine pour former le matériau d'amortissement. De préférence, les couches de tissus superposées présentent le même motif ou la même armure. Ceci ayant pour avantage d'éviter le phénomène d'interpénétration ou d'entrelacement des fils d'une couche avec ceux d'une couche inférieure ou supérieure directement en contact ;
- le grammage d'une couche de textile ou d'un pli de tissu est supérieur ou égal à 350 g/m$^2$, de préférence inférieur à 2000 g/m$^2$, de préférence inférieur à 1000 g/m$^2$, de préférence inférieur à 700 g/m$^2$. Un grammage plus faible conduit à augmenter le nombre de couches de tissu ce qui rend l'opération de fabrication plus longue et donc plus couteuse. Un grammage trop élevé conduit à une performance dégradée à masse surfacique équivalente.
- la porosité dudit matériau d'amortissement est inférieure ou égale à 5% en volume ;
- ladite matrice présente des pores de largeur moyenne comprise entre 10% et 500% du diamètre équivalent moyen desdites fibres, de préférence entre 10% et 100% dudit diamètre, de préférence entre 10% et 50% dudit diamètre. De préférence, en nombre, plus de 90%, de préférence plus de 95%, de préférence plus de 99% des pores présentent une largeur supérieure à 1 micromètre, de préférence supérieure à 2 micromètres, de préférence supérieure à 5 micromètres et/ou inférieure à 50 micromètres, de préférence inférieure à 30 micromètres, de préférence à 15 micromètres ;
- ladite matrice comprend éventuellement des additifs tels qu'une charge minérale ;
- la densité de ladite résine est comprise entre 0,8 et 1,35 g/cm$^3$ ;
- la résine comprend essentiellement des éléments chimiques de carbone (C) hydrogène(H) et oxygène (O) ;
- la matrice comprend une résine époxy ;
- le matériau d'amortissement présente une dureté Vickers inférieure à 3 GPa ;
- ladite plaque de dissipation a une surface supérieure ou égale à 150 cm$^2$ et/ou une épaisseur comprise entre 1 et 50 mm, de préférence entre 3 et 20 mm ;
- ladite plaque de dissipation est entourée par une enveloppe d'un matériau de confinement,
- ladite plaque de blindage antibalistique comprend ladite plaque de dissipation de l'énergie d'impact.

En particulier, dans certains modes de réalisation de la présente invention, une plaque anti-impact peut être placée devant la plaque d'amortissement ou de dissipation de l'énergie d'impact afin de résister à des projectiles très perforants, par exemple afin de respecter les standards NIJ-IIIA, NIJ-III ou NIJ-IV pour les protections personnelles ou STANAG 4569 pour les protections non personnelles.

Selon un deuxième aspect général, la présente invention se rapporte ainsi à une plaque de blindage telle que précédemment décrite, comprenant en outre une plaque anti-impact constituée d'un matériau de dureté supérieure à celle du matériau d'amortissement. Ladite plaque anti-impact présente en général une épaisseur supérieure à 2 mm, et est placée devant ladite plaque de dissipation, par rapport à la direction d'impact.

On décrit ci-après d'autres modes de réalisations préférés de la présente invention, qui peuvent bien évidemment, le cas échéant, être combinés entre eux, décrivant le cas d'une plaque de blindage comprenant une plaque anti-impact en complément de la plaque d'amortissement décrite précédemment :

- l'épaisseur de ladite plaque anti-impact est supérieure à 4mm, de préférence 6mm, de préférence supérieure à 10mm. Selon un mode possible l'épaisseur de ladite plaque est inférieure à 100 mm, de préférence inférieure à 50mm, voire même inférieure à 20mm;

- le ratio d'épaisseur de la plaque de dissipation d'énergie sur l'épaisseur de la plaque anti-impact est de préférence compris entre 0,5 et 5, de préférence supérieur à 1 et/ou inférieur à 3 ;
- la surface de ladite plaque anti-impact est supérieure à 150 cm$^2$ ;
- la surface de la plaque de dissipation d'énergie correspond à au moins 80% de celle de la plaque anti-impact ;
- le matériau de la plaque anti-impact présente une dureté Vickers supérieure à 3 GPa, de préférence supérieure à 5GPa, de manière plus préférée supérieure à 10 GPa ;
- la masse volumique apparente de la plaque anti-impact est inférieure à 10 g/cm$^3$, de préférence inférieure à 7 g/cm$^3$, de préférence inférieure à 5 g/cm$^3$, de préférence inférieure à 3,2 g/cm$^3$, de préférence inférieure à 3,0 g/cm$^3$ et/ou supérieure à 1,0 g/cm$^3$ ;
- le matériau de la plaque anti-impact est un matériau fritté comprenant des grains, comprenant, de préférence constitués en un carbure métallique ou en un borure métallique. De préférence les grains sont des grains de carbure de silicium ou de carbure de bore ou un mélange de ces deux carbures ;
- Selon un mode possible, les grains sont exclusivement des grains de carbure de silicium, avec éventuellement une phase métallique, de préférence comprenant l'élément silicium ;
- Selon un mode possible, les grains dudit matériau fritté sont liés par une matrice, comprenant ou constituée d'une phase de nitrure de silicium (Si$_3$N$_4$) et/ou d'une phase d'oxynitrure de silicium (Si$_2$ON$_2$) et/ou de SiAlON ;
- Selon un mode possible, lesdits grains dudit matériau fritté sont liés par une matrice qui représente de préférence entre 5 et 40% en masse, de préférence entre 15 et 35% en masse, de la masse du matériau de la plaque anti-impact ;
- ladite plaque anti-impact est collée à ladite plaque de dissipation d'énergie au moyen d'une colle choisie parmi les colles par exemple à base de polyuréthane, de polymères époxydes ou de polymères thermoplastiques ou d'élastomères ;
- ladite plaque de blindage est entourée par une enveloppe d'un matériau de confinement.

Selon un troisième aspect général, la plaque de blindage selon l'invention, comprenant ladite plaque de dissipation de l'énergie d'impact, est recouverte au moins partiellement, de préférence complètement, d'une enveloppe externe en un matériau de confinement par exemple sous forme d'un textile, par exemple d'un tissu, comprenant des fibres de verre, ou de carbone, ou de polyéthylènes PE, notamment les polyéthylènes ultra haute densité (UHMPE), ou d'aramide, en particulier le Kevlar®, ou de métal tel que l'aluminium ou même de l'acier, en particulier dans le cas de protections non personnelles.

La présente invention se rapporte également à un procédé de fabrication dudit matériau d'amortissement pour une plaque de dissipation telle que précédemment décrite ou d'une plaque de dissipation telle que précédemment décrite, ledit procédé comportant les étapes suivantes :

1) préparation, de préférence par tissage, d'au moins une couche fibreuse comprenant des fils de fibres de silice de teneur massique supérieure à 90% de SiO$_2$ de manière à obtenir un renfort comprenant au moins 50% en volume desdits fils ;
2) préparation d'un mélange comprenant une résine thermodurcissable dont la viscosité mesurée à l'aide d'un Rhéomètre plan/plan de plateaux de diamètre de 20mm avec entrefer de 1mm est comprise entre 80 et 300 Pa.s pour un taux de cisaillement de 100 à 200 s$^{-1}$ à 50°C;
3) imprégnation de chaque couche fibreuse par ledit mélange et empilement de chaque couche de manière à obtenir une préforme dont le taux volumique de renfort fibreux dudit matériau d'amortissement est compris entre 20% et 70% ;
4) cuisson de la préforme dans un autoclave à pression et température contrôlée afin de polymériser et réticuler ladite résine et former un renfort lié par une matrice organique constituant ledit matériau d'amortissement.
5) éventuellement une mise en forme dudit matériau d'amortissement ainsi obtenu sous forme d'une plaque, notamment par découpe ou par ébavurage.

On décrit ci-après différents modes de réalisation préférés de la présente invention, qui peuvent bien évidemment, le cas échéant, être combinés entre eux :

- la résine de la matrice organique est une résine thermodurcissable choisie parmi les résines phénoliques ; les résines époxy ; résines polyimides ; polyuréthane ; ou leurs dérivés ou un mélange de ces produits. -les additifs de la résine sont choisis parmi : un catalyseur, un agent de renfort, un agent démoulant, un durcisseur.
- le mélange de résine représente au moins 30%, de préférence plus de 35%, de préférence plus 40% et moins de 70%, de préférence moins de 60%, de préférence moins de 55%, en masse sur la base dudit mélange de l'étape 2).
- la résine est de préférence une résine époxy. Le poids équivalent d'époxy de ladite résine mesuré selon la norme ASTM D1652 est supérieur à 200, de préférence supérieur à 220. Il s'agit de la masse en gramme de résine nécessaire pour fournir une mole de groupe époxy. Un poids inférieur conduit à une résine qui présente une surface de liaison plus élevée avec les fils de silice du renfort fibreux, le matériau de dissipation matériau présentant une porosité plus faible.
- la cuisson de la préforme est de préférence réalisée à moins de 200°C entre 1 et 5 bars. De préférence, elle comprend une première étape avec un palier entre 80 et 120°C et de préférence une deuxième étape avec un palier entre 130 et 180°C.

La présente invention se rapporte également à l'utilisation d'une plaque de dissipation ou d'une plaque de blindage telles que précédemment décrites comme protection antibalistique :

- d'une personne, ladite protection étant choisie parmi un gilet pare-balles, un casque, ou
- d'un véhicule terrestre, maritime ou aérien, ou
- d'une installation fixe choisie parmi un bâtiment, un mur d'enceinte, ou un poste de garde, ou
- d'un radôme ou d'un équipement de détection ou de communication, en particulier un équipement d'optronique.

Un telle utilisation peut être mise en œuvre, sans sortir du cadre de l'invention, sous la forme d'une plaque, d'une tuile, d'une mosaïque, par exemple sous forme d'hexagones ou de nodules, d'un plastron, d'un bouclier, d'un casque, d'une porte, d'un siège, d'un tube.

On donne ci-après les indications et définitions suivantes, en relation avec la description précédente de la présente invention :

- Une « fibre » est une structure orientée dans une direction et d'un même matériau dont la longueur est supérieure à 5 fois son diamètre équivalent.
- Une « fibre longue » est une fibre dont la longueur est supérieure à 1 mm et inférieure à 10 mm.
- Une « fibre continue » est une fibre dont la longueur est supérieure à 10 mm.
- Un fil est constitué de plusieurs fibres. Un « fil long » est un fil constitué de fibres longues. Un « fil continu » est un fil constitué de fibres continues dont la longueur est supérieure à 10 mm.
- Le diamètre équivalent d'une fibre ou d'un fil est le diamètre d'un disque de même surface que sa section transversale de ladite fibre ou dudit fil à mi-longueur.
- Un « fil simple » est un assemblage de fibres qui, en section transversale, comporte plus de 10 et de préférence moins de 500 000 fibres, et dont la longueur est supérieure à 5 fois le diamètre. Les fibres sont assemblées de manière à être enroulées ou non sur elles-mêmes selon un niveau de torsion S ou Z selon le sens d'enroulement et dont l'indice de 0 à 30 correspond au nombre de tours par mètre. Un niveau de torsion $Z_0$ correspond à un fil dont les fibres ne sont pas enroulées et disposées parallèlement.
- Un « fil assemblé » est un assemblage de fils simples qui, en section transversale, comporte de préférence plus de 2 et de préférence moins de 500 fils simples.
- Un assemblage parallèle de fils simples après ourdissage afin de les aligner (ou « staple yarn » en anglais) est également un assemblage secondaire.
- Un textile peut être :

  - une structure organisée de fils, simples ou assemblés, notamment un tricot, une tresse, une toile, un tissu, ou
  - une structure aléatoire de fils, simples ou assemblés, par exemple un voile, et/ou de fibres non incorporées sous la forme de fils, ladite structure aléatoire pouvant être par exemple un papier ou un feutre, une structure aléatoire n'étant pas préférée.

- l'armure d'une toile ou d'un tissu désigne la manière dont les fils se croisent, contribuant ainsi à définir un motif particulier.
- Par diamètre équivalent de grains, on entend la demi-somme de la plus grande longueur du grain et de la plus grande largeur du grain, mesurée dans une direction perpendiculaire à ladite plus grande longueur.

- Les diamètres équivalents maximal et moyen de particules ou de fibres ou de fils sont classiquement déterminés à partir de l'observation de la microstructure du matériau classiquement grâce à des images prises en MEB (microscopie électronique à balayage) sur une coupe dudit matériau.

- Par « matrice » on entend une phase cristallisée ou non, assurant une structure sensiblement continue entre les grains, ou les fibres ou les fils dans le cas d'un matériau fibreux, obtenue à partir des constituants de la charge de départ et éventuellement un traitement thermique. Une matrice entoure sensiblement les grains, ou les fibres ou les fils dans le cas d'un matériau fibreux c'est-à-dire les enrobe.

- Dans un composite à matrice organique comme le matériau d'amortissement selon la présente invention, le renfort fibreux est lié par une matrice de résine thermodurcissable. Il est obtenu par imprégnation d'un textile fibreux par un mélange de résine comprenant au moins un ou plusieurs prépolymères, un durcisseur et de préférence un catalyseur et un agent de renfort, voire aussi un agent démoulant, suivi d'une cuisson ou traitement thermique de durcissement permettant la polymérisation et réticulation de la résine afin de former une matrice de résine thermodurcissable.

- Dans un corps céramique fritté, comme par exemple peut l'être la plaque anti-impact, les grains céramiques sont liés par la matrice obtenue par frittage d'une préforme. Lors du frittage, ils conservent sensiblement la forme et la nature chimique qu'ils présentaient dans la charge de départ. Dans le corps céramique fritté, la matrice et les grains représentent ensemble 100% de la masse du produit.

- Par masse volumique apparente, on entend au sens de la présente invention, le rapport égal à la masse du produit divisée par le volume qu'occupe ledit produit. Elle est classiquement déterminée par la méthode d'Archimède. La norme ISO 5017 précise par exemple les conditions d'une telle mesure. Cette norme permet aussi de mesurer la porosité ouverte d'un matériau céramique.

- la porosité du matériau d'amortissement est mesurée selon la norme ASTM D3171-15.

En particulier, le taux volumique de renfort fibreux $T_f$ est le rapport en pourcentage entre le volume apparent de fibres et le volume apparent du matériau d'amortissement. Il est calculé à partir de la formule suivante :

$$Tf = \frac{Vfibres}{Vcomp} = \frac{Mfibres \times dcomp}{Mcomp \times dfibres}$$

où :

$V_{fibres}$ est le volume apparent de fibres
$M_{fibres}$ est la masse de fibres
$d_{fibres}$ est la masse volumique de fibres
$V_{comp}$ est le volume apparent du matériau d'amortissement
$M_{comp}$ est la masse du matériau d'amortissement
$d_{comp}$ est la masse volumique du matériau d'amortissement

La masse de composite est mesurable par simple pesée du matériau d'amortissement, la masse volumique apparente dudit matériau étant déterminée par pesée hydrostatique selon le principe d'Archimède.

La masse de fibres peut être déterminée après combustion/digestion de la résine selon la norme ASTM D3171-15. Il est possible ensuite par pesée hydrostatique de déterminer la masse volumique apparente desdites fibres.

- La largeur des pores du matériau d'amortissement est mesurée par analyse d'image prises au microscope électronique à balayage.

- La teneur massique en $SiO_2$ des fils de silice du renfort peut être mesurée par fluorescence X.

- La composition en phase du matériau constituant la plaque anti-impact est normalement obtenue par diffraction des rayons X et analyse de Rietveld. Les teneurs en azote élémentaire (N) dans les produits frittés ont été mesurées au moyen d'analyseurs LECO (LECO TC 436DR ; LECO CS 300). Les valeurs sont fournies en pourcentages massiques. Les phases cristallisées, notamment les phases cristallisées azotées ou de métaux résiduels sont déterminables par diffraction aux rayons X et quantifiées selon la méthode de Rietveld.

- La dureté Vickers d'un matériau peut être mesurée à l'aide d'une pointe pyramidale normalisée en diamant de base carrée et d'angle au sommet entre faces égal à 136°. L'empreinte réalisée a donc la forme d'un carré ; on mesure les deux diagonales d1 et d2 de ce carré à l'aide d'un appareil optique. La dureté est calculée à partir de la force appliquée sur la pointe diamantée et la valeur d moyenne de d1 et d2 selon la formulation suivante :

$$H_V = 0,189 \cdot \frac{F}{d^2} \qquad \text{avec}$$

$H_V$ = Dureté Vickers.

$F$ = Force appliquée [N]

$d$ = Moyenne des diagonales de l'empreinte [mm]

La force et la durée de l'appui sont également normalisées. La norme de référence applicable pour les matériaux céramiques en particulier est l'ASTM C1327 « Standard Test Method for VICKERS Indentation Hardness of Advanced Ceramics ».

- On appelle « diamètre médian » ou « taille médiane » d'un ensemble de particules, en particulier d'une poudre, le percentile $D_{50}$, c'est-à-dire la taille divisant les particules en première et deuxième populations égales en volume, ces première et deuxième populations ne comportant que des particules présentant une taille supérieure, ou inférieure respectivement, à la taille médiane.
- On qualifie de « résiduel » un constituant présent dans la charge de départ et encore présent dans le produit fritté obtenu à partir de cette charge de départ.
- Par impuretés on entend les constituants inévitables, introduits involontairement et nécessairement avec les matières premières ou résultants de réactions avec ces constituants. Les impuretés ne sont pas des constituants nécessaires, mais seulement tolérés.
- Par «contenant un», «comprenant un» ou «comportant un», on entend «comportant au moins un», sauf indication contraire.

Sauf indication contraire, dans la présente description, tous les pourcentages sont des pourcentages massiques.

Sauf mention contraire, toutes les moyennes sont des moyennes arithmétiques.

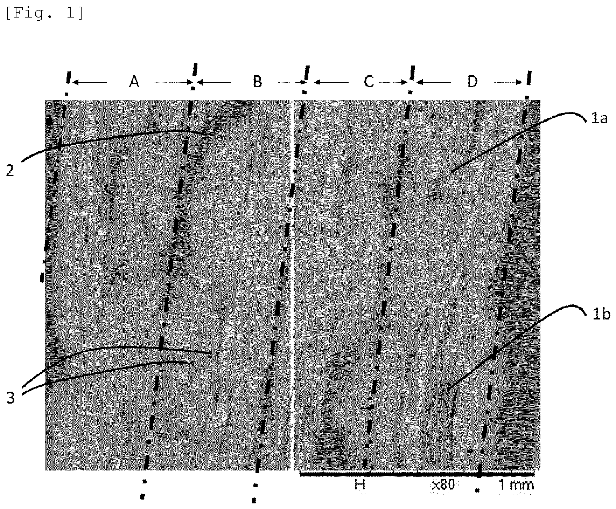

La figure 1 montre une vue au microscope électronique à balayage d'une coupe du matériau d'amortissement de l'exemple 3 selon l'invention dont le renfort est constitué de plusieurs plis ou couches (A, B, C, D) de tissu. Le tissu est constitué de fibres de silice 1a et 1b assemblés en fils simples. Les fils de fibres de silice sont constitués en réseau avec des fils de chaîne (constitués par les fibres 1a) et des fils de trame (constitué par les fibres 1b), sensiblement perpendiculairement les uns aux autres, comme montré par la figure 1. Les fils sont enrobés par de la matrice 2 constitué par une résine. La porosité est présente au sein de la matrice et à l'interface entre les fils sous forme de pores 3 dont la largeur moyenne de l'ordre de 3 micromètres.

Le produit selon l'invention permet en fonction des configurations choisies une protection contre différents types de projectiles, par exemple une balle, un obus, une mine ou un élément projeté lors de la détonation d'explosifs, comme des boulons, des clous (ou IED pour «Improvised Explosive Device») et constitue normalement un élément d'armure pour véhicules ou comme protection de personnes, d'installations fixes ou d'équipements de communication, généralement sous forme de modules comme des plaques.

Sous l'impact des projectiles, de façon connue, une plaque de blindage se fragmente afin d'absorber l'énergie d'impact du projectile. Lorsque celui-ci présente un pouvoir perforant élevé, il est nécessaire d'utiliser une plaque anti-impact, placée alors entre la menace et une plaque de dissipation de l'énergie d'impact. La plaque anti-impact a pour rôle principal de briser le noyau du projectile arrivant au contact de la plaque de blindage. Le rôle de la plaque de dissipation est de consommer par déformation plastique l'énergie cinétique dûe à l'impact du projectile et de maintenir un niveau de confinement de la plaque de blindage, avantageusement optimisé par une enveloppe de confinement. Dans le cadre de la présente invention, la société déposante a ainsi développé un nouveau matériau d'amortissement pour une plaque de blindage capable de résister par exemple à une menace de type 0,30-0,6-APM2 le matériau d'amortissement présentant un rapport masse sur surface typiquement inférieur à 20kg/m$^2$. Il en résulte une réduction du poids total du blindage, pour une protection identique.

Les différentes étapes d'un procédé selon l'invention sont décrites plus en détail ci-après.

Préparation du renfort fibreux :

De préférence, les tissus sont choisis parmi ceux de type 2D ou UD. Ces armures de tissus montrent les meilleures performances balistiques. En particulier l'armure selon le motif satin est la plus préférée car le tissu selon ce motif présente possédant moins d'intersections entre la chaîne et la trame qui peuvent constituer des points potentiels de faiblesse du renfort. Parmi les tissus de fibres de silice Q600 à Q660 fournis par Saint-Gobain Quartz sont préférés car ils présentent des grammages supérieurs à 350 g/m$^2$.

Préparation de la résine :

Le mélange de résine est choisi à partir d'une résine dont le comportement est de préférence rhéofluidifiant. Autrement dit sa viscosité baisse lorsque l'effort de cisaillement augmente dans une certaine gamme. La gamme suivante est tout particulièrement adaptée à la mise en œuvre et l'obtention du matériau d'amortissement selon l'invention. La résine présente de préférence le comportement rhéologique suivant mesuré à l'aide d'un rhéomètre plan/plan avec plateaux de diamètre de 20mm et entrefer de 1mm, à 50°C :

| Taux de cisaillement (s$^{-1}$) | Viscosité dynamique (Pa.s) |
|---|---|
| 100 | 100 à 300 |
| 200 | 80 à 150 |
| >400 et < 500 | <80 |

Afin d'obtenir les meilleures conditions de mise en œuvre du matériau d'amortissement composite, notamment une durée optimale d'imprégnation, la résine présente de préférence le comportement rhéologique suivant mesuré à l'aide d'un rhéomètre plan/plan avec plateaux de diamètre de 20mm et entrefer de 1mm à 50°C par oscillation pendant 3h à une fréquence de 2Hz pour une déformation de 0,1%, la résine après 3 heures présente de préférence une viscosité inférieure à 400 Pa.s. De préférence, la variation de viscosité entre 1h et 3h est inférieure à 10%, de préférence inférieure à 5%.

Imprégnation du renfort et formation de pré-imprégnés : Lorsque le renfort est constitué de plusieurs couches de textile ou de plusieurs plis de tissu, la résine étant en général trop visqueuse à température ambiante pour pouvoir réaliser une imprégnation de plusieurs couches déjà empilées, il est préférable de pré-imprégner chaque couche de textile ou pli de tissu avant de pouvoir les empiler.

Le mélange de résine est dans un premier temps chauffé à une température de mise en œuvre à partir de laquelle sa viscosité est de préférence inférieure à 400 Pa.s avec un taux de cisaillement de 200s$^{-1}$, de préférence à une température de l'ordre de 50°C. Un film du mélange de résine est déposé sur un plateau en téflon chauffé à la température de mise en œuvre précédente. La couche de renfort, de préférence un pli de tissu est déposé sur le plateau puis un deuxième film de résine est déposé sur la couche de renfort. Une légère pression est appliquée sur le pré-imprégné pour faciliter l'imprégnation du tissu. Le pré-imprégné est ensuite placé dans une poche scellée, si nécessaire conservée au congélateur avant d'être utilisée pour l'étape suivante après décongélation afin de favoriser la séparation avec le plateau de téflon.

Cette première étape peut être répétée autant de fois qu'il y a de couches de renfort à superposer afin de former un empilement de couches lorsque le renfort est constitué de plusieurs couches.

De préférence, la préforme de pré-imprégné ainsi obtenue est ensuite placée dans une poche à vide, maintenue à moins de 1 bar avant la cuisson.

Cuisson du pré-imprégné :

La préforme est ensuite placée dans un autoclave afin d'appliquer un cycle de température et de pression.

Durant cette étape de cuisson la première phase de montée en température avec un palier de fluidification entre 50 et 150°C et une montée en pression jusqu'à 2 bar permet avantageusement de chasser plus facilement les potentiels dégagement gazeux et répartir la résine de manière la plus uniforme possible. L'élévation consécutive de la température au-delà de la température de réticulation de la résine thermodurcissable permet la polymérisation de la résine et la formation de la matrice enrobant le renfort. Le choix de la résine dans la gamme de viscosité revendiquée permet avantageusement d'obtenir un matériau d'amortissement selon l'invention présentant un volume de porosité contrôlé. Le choix d'une résine présentant des conditions d'ouvrabilité telles que décrites précédemment permet avantageusement d'obtenir matériau d'amortissement dont la distribution de largeur de pores est contrôlée.

Plaque anti-impact :

La plaque anti-impact de la plaque de blindage selon l'invention, si elle est présente, peut être obtenue en particulier par un procédé comprenant les étapes suivantes :

a) préparation d'une charge de départ comportant :

- au moins une poudre de particules de carbure de silicium,

EP 4 581 327 B1

- une poudre comprenant du silicium métallique,
- éventuellement une poudre d'un additif de frittage en phase solide,

b) mise en forme de la charge de départ sous la forme d'une préforme,
c) démoulage après durcissement ou séchage,
d) optionnellement, séchage de la préforme, de préférence de manière jusqu'à ce que l'humidité résiduelle soit comprise entre 0 et 0,5% en poids,
e) cuisson et frittage de la préforme sous atmosphère d'azote, ou sous atmosphère non oxydante si de l'azote est présent dans la charge de départ, de préférence à une température comprise entre 1300 et 1600°C, de manière à obtenir le produit fritté constituant la plaque anti-impact.

Dans un tel procédé, à l'étape a) on utilise au moins une poudre initiale de carbure de silicium dont le diamètre médian des particules est compris entre 10 micromètres et 500 micromètres, et de préférence est compris entre 50 et 300 micromètres. Dans certains modes de réalisation avantageux, on utilise une deuxième poudre de carbure de silicium de taille médiane au moins deux fois inférieure à la première et de préférence de diamètre moyen compris entre 1 et 5 micromètres.

A l'étape b), la préforme peut être obtenue par coulage ou par pressage de la charge ou du mélange dans un moule, avec ou sans vibration.

Pendant la cuisson à l'étape e), l'azote du four de cuisson réagit (« frittage réactif ») avec certains des constituants de la préforme, en particulier avec le silicium métallique voire avec l'Aluminium métallique si celui-ci est présent seul ou en sous forme d'alliage avec le Silicium, avec aussi l'alumine calcinée ou un silicate d'aluminium par exemple de l'argile si ces ajouts sont présents, pour former une matrice et ainsi lier les grains du corps céramique.

Dans la plaque anti-impact de la plaque de blindage selon l'invention les grains de céramique, de préférence des grains de carbure de Silicium et/ou de Bore peuvent être liés par une matrice comprenant une phase SiAlON sans ajout de composés à base de terre rare sans recourir à une température de frittage élevée, c'est-à-dire à une température supérieure à 1650°C. En particulier la cuisson d'une préforme comprenant de l'Aluminium métallique seul ou sous forme d'alliage avec le Silicium sous atmosphère d'azote entre 1300 et 1500°C durant un palier suffisamment long (>4heures) permet d'obtenir une plaque anti-impact en un matériau fritté présentant une teneur massique en Al et Si métalliques résiduels inférieure à 1%.

Le mélange initial peut également comprendre une fraction d'une poudre d'alumine de diamètre médian compris entre 1 et 10 micromètres, servant d'agent de frittage.

La plaque anti-impact de la plaque de blindage selon l'invention est en particulier obtenue par un procédé tel que décrit précédemment, de préférence en présence d'un additif de frittage choisi parmi le carbone, les carbures de bore, de titane, de zirconium ou les borures de zirconium, de titane, seuls ou en mélange.

Dans un mode particulièrement préféré, le produit est obtenu par un procédé tel que décrit précédemment dans lequel l'additif de frittage comprend ou est constitué par le carbure de bore $B_4C$. Par additif de frittage, souvent plus simplement appelé « additif » dans la présente description, on entend un composé connu habituellement pour permettre et/ou accélérer la cinétique de la réaction de frittage. Dans un mode de réalisation, la charge de départ contient un liant et/ou un lubrifiant et/ou un agent tensio-actif. Dans un mode de réalisation, la charge de départ ne contient pas de liant.

Le mélange est effectué de manière à obtenir une bonne homogénéité de distribution des différents éléments, le temps de mélange pouvant être adapté pour atteindre ce résultat.

De préférence, le mélange des réactifs initiaux s'effectue dans un broyeur à jarre, le temps de mélange étant supérieur à 15 heures. Un temps de mélange de 24 heures est bien adapté. Lorsque le mélange est obtenu, celui peut être atomisé ou granulé, par exemple par «freeze granulation», afin d'obtenir des granules qui seront mises en forme, par exemple par pressage afin d'obtenir une préforme en céramique. D'autres techniques de mise en forme peuvent être utilisées, comme l'injection, le coulage en barbotine. Après mise en forme, la préforme peut être usinée.

La préforme est ensuite frittée. Le frittage s'effectue sous atmosphère azotée.

De préférence, la poudre de carbure de silicium présente une teneur en élément oxygène inférieure à 2%, de préférence inférieure à 1,6%, de préférence inférieure à 1,4%, de préférence inférieure à 1,2%, de préférence inférieure à 1%, voire inférieure à 0,7%, voire inférieure à 0,5%, voire même inférieure à 0,3% poids. Dans un mode de réalisation, la teneur en élément oxygène de la poudre de carbure de silicium peut être diminuée avant utilisation par toute technique connue de l'homme du métier, comme par exemple un lavage à l'acide.

Dans un mode de réalisation, la teneur en aluminium de la charge de départ est inférieure à 1000 ppm, voire inférieure à 500 ppm voire inférieure à 300 ppm, rapporté au poids de la charge de départ.

La cuisson a lieu sous atmosphère contrôlée, de préférence sous azote pour l'obtention de la phase intergranulaire nitrurée.

Les exemples qui suivent sont donnés à titre purement illustratif et ne limitent sous aucun des aspects décrits la portée de la présente invention.

9

**Exemples :**

Hormis l'exemple 1 dont le matériau d'amortissement est un composite commercialement disponible, il a été réalisé pour chaque exemple un empilement de 18 à 19 couches de tissu imprégné de résine (afin de travailler à densité surfacique constante) suivi d'un traitement thermique en autoclave comprenant sous 2 bars un palier à 100°C suivi d'une étape de réticulation avec un palier de 3h à 160°C afin d'obtenir pour chaque exemple 2 plaques d'amortissement de surface d'environ 150×150 mm$^2$. L'épaisseur a été adaptée de manière à pouvoir comparer les plaques finales de blindage de tous les exemples, à densité surfacique égale à 42±1,5 kg/m$^2$. Pour tous les exemples, chacune des plaques d'amortissement a été collée à l'aide d'une colle epoxy Elantech 891-892 fournie par la société Elantas sur une plaque céramique de SiC de dureté supérieure à 10 Gpa mesurée selon norme la norme ASTM C1327:03 et de dimensions 100x100x10mm$^3$ afin de réaliser 2 plaques de blindage finales.

Exemple 1 (comparatif):

Dans le cas de cet exemple la plaque de dissipation d'énergie d'impact est un matériau d'amortissement de référence HB26 Dyneema® commercialisé par la société DSM tel que cité dans US2013/0220106A1.

Exemple 2 (comparatif):

Le matériau d'amortissement de l'exemple 2 comparatif est réalisé à partir d'un renfort fibreux sous forme d'un tissu de grammage 500 g/m$^2$ constitué de fils de Quartzel® chaque fil simple étant constitué de 20 fibres de silice de teneur massique supérieure à 99% de SiO$_2$ et de diamètre équivalent moyen de 9 micromètres. Les fils de masse linéique de 667 tex et de coefficient de torsion Z3 sont assemblés sous forme d'un tissu d'armure satin régulier de 8 avec décochement de 3, l'entrecroisement des fils étant perpendiculaire.

La matrice de l'exemple 2 a été obtenue à partir d'un mélange de résine epoxy comprenant en masse :

- 73% d'un mélange de 3 différents prépolymères époxy (composé à au moins 70% d'un prépolymère à base de diglicidyl ether de bisphénol A) ayant un poids moyen équivalent d'époxy de 180 grammes,
- 3% d'un durcisseur sous forme d'une poudre micronique de dicyandiamide,
- 18% d'un agent de renfort sous forme d'une résine de polyphénylène éther de formule Poly(2,6-diméthyl-1,4-phénylène éther), et
- 6% d'un catalyseur imidazole modifié fourni par Curezol®. La viscosité dynamique de la résine mesurée à 50°C pour un taux de cisaillement de 200 s$^{-1}$ dans les conditions précédemment décrites est de 50 Pa.s.

Exemple 3 (invention):

La matrice de l'exemple 3 selon l'invention se distingue de la formulation précédente en ce que les composants du prépolymère époxy ont été modifiés afin d'y incorporer pour environ 50% massique un prépolymère époxy obtenu à partir d'huile de coquille de noix de cajou. Le nouveau prépolymère époxy consiste en un mélange de deux résines ayant un poids moyen équivalent d'époxy de 253 grammes. La viscosité du nouveau mélange des deux résines epoxy mesurée dans les mêmes conditions que précédemment est de 100 Pa.s.

Exemple 4 (comparatif):

L'exemple 4 comparatif se distingue de l'exemple 3 selon l'invention en ce qu'une chaine et une trame sur 2 est remplacée par un fil assemblé de fibres de lin Lincore® de masse linéique de 500 tex, le renfort final présentant un grammage de 500 g/m$^2$, 43% de la masse étant représentée par les fils de lin pour 57% par les fils de silice pure.

Exemple 5 (comparatif):

L'exemple 5 comparatif se distingue de l'exemple 3 en ce que la proportion de matrice a été réduite de moitié.

Exemple 6 (comparatif):

L'exemple 6 comparatif se distingue de l'exemple 3 en ce que la résine présente une viscosité supérieure à 300 Pa.s et inférieure à 500 Pa.s pour un taux de cisaillement de 200 s$^{-1}$ à 50°C mesurée dans les mêmes conditions que précédemment. Les propriétés balistiques de chaque plaque de blindage finale sont rassemblées dans le tableau 1 qui suit. La performance balistique des différentes plaques de blindage a été évaluée à l'aide des mesures des déformations dynamiques en face arrière qui correspondent aux déformations élastiques des matériaux d'amortissement pendant l'impact. Chaque plaque de blindage a été testée sur des blocs de plastiline Sueur 40 de dureté shore A comprise entre 15 et 19 face à des impacts simples (mono-impact) tirés en leur centre. Les tirs ont été réalisés sur la face en SiC des différentes plaques d'armure en configuration 'stand-alone'. Les essais ont été réalisés avec la menace .30-06 AP M2 tirée à la vitesse nominale de $878 \pm 9$ m/s depuis une distance de 15 mètres. Sur chaque bloc de plastiline a été mesuré à l'aide d'un pied à coulisse la profondeur et le diamètre des déformations laissées par la plaque de dissipation au niveau de l'impact. Ces indicateurs permettent de caractériser les déformations dynamiques des plaques d'amortissement apparues sous l'effet de l'impact. Une moyenne arithmétique a été calculée pour chaque exemple. La présence d'une perforation « P » dans le tableau 1 indique une performance balistique significativement réduite associée à une capacité d'amortissement amoindrie.

Les résultats reportés dans le tableau 1 qui suit montrent que :

Par rapport à celles du matériau commercial de l'exemple 1 comparatif, les plaques de dissipation de l'exemple 3 selon l'invention présentent, à densité surfacique équivalente, une profondeur de déformation réduite d'un tiers et un diamètre de déformation augmenté de 20%, ce qui montre une aptitude à dissiper l'énergie nettement plus élevée par rapport au produit de référence sur le marché.

L'exemple 3, par comparaison avec les exemples 2 et 4, montre que le matériau dont le renfort et la matrice ont été sélectionnés selon l'invention, présente une aptitude à dissiper l'énergie plus élevée.

L'exemple 5 comparatif montre qu'un taux volumique de renfort supérieur à 80% réduit la performance balistique. L'exemple 6 comparatif montre qu'un matériau d'amortissement obtenu avec une résine trop visqueuse entraîne un niveau de porosité trop élevé et par suite une performance balistique réduite.

[Tableau 1]

| | Exemple 1 comparatif | Exemple 2 comparatif | Exemple 3 invention | Exemple 4 comparatif | Exemple 5 comparatif | Exemple 6 comparatif |
|---|---|---|---|---|---|---|
| Répartition massique (%) du renfort et de la matrice du matériau d'amortissement | | | | | | |
| Fraction massique de fils de silice (%) | | 57,6 | 52,6 | 28,7 | >80 | 67 |
| Fraction massique de fibres de lin (%) | | 0 | 0 | 21,7 | 0 | 0 |
| Fraction massique de résine (matrice) (%) | N.A | 42,4 | 47,4 | 49,6 | <20 | 33 |
| Viscosité de la résine en Pa.s* | | 50 | 100 | 100 | 100 | >300 et <500 |
| poids équivalent d'époxy (g/eq) | | 180 | 253 | 253 | 253 | 350 |
| Caractéristiques du matériau d'amortissement de la plaque de blindage | | | | | | |
| Epaisseur moyenne (mm) | 14 | 8,5 | 9 | 10 | 9 | 9,5 |
| Taux volumique de renfort fibreux (%) | >80 | 40 | 36 | 38 | >75 | 50 |
| Taux volumique de fibres de silice dans le renfort(%) | 0 | 100 | 100 | < 30 | 100 | 100 |
| Porosité x du matériau d'amortissement (%) | <2 | <2 | 2<x<5 | 2<x<5 | >5 | 13 |
| MVA du matériau d'amortissement (g/cm$^3$) | 0,97 | 1,57 | 1,63 | 1,43 | > 1,3 | 1,52 |
| Densité de la résine de la matrice (g/cm$^3$) | 0,9-1,3 | 1,1 | 1,1 | 1,1 | 1,1 | 1,1 |
| Grammage du renfort (g/m$^2$) | N.M | 500 | 500 | 440 | 500 | 500 |

(suite)

| Caractéristiques du matériau d'amortissement de la plaque de blindage | | | | | | |
|---|---|---|---|---|---|---|
| Masse linéique des fils du renfort (tex) | N.M | 667 | 667 | 667/500 | 667 | 667 |
| Diamètre équivalent moyen de fibres ($\mu$m) | 17 | 9 | 9 | 9 | 9 | 9 |
| Largeur moyenne de pores ($\mu$m) | N.M | < 3 | 3 | 3 | >5 | >5 |
| Taux de torsion des fils (Z) | Z0 | Z3 | Z3 | Z3 | Z3 | Z3 |
| Performance balistique (dimensions en mm) à densité surfacique égale | | | | | | |
| Profondeur moyenne de déformation | 24 | P | 16 | P | P | P |
| Diamètre moyen de déformation | 60 | P | 72 | P | P | P |
| N.A = non applicable ; N.M = non mesurée ; P = perforation ; *à 50°C et cisaillement de 200s$^{-1}$; MVA=masse volumique apparente; | | | | | | |

Bien entendu, la présente invention n'est pas limitée aux modes de réalisation décrits et représentés, fournis à titre d'exemples. En particulier, des combinaisons des différents modes de réalisation décrits entrent également dans le cadre de l'invention.

**Revendications**

**1.**  Plaque de dissipation de l'énergie d'impact pour blindage antibalistique, ladite plaque de dissipation étant constituée d'un matériau d'amortissement constitué d'un renfort fibreux lié par une matrice organique, ledit renfort comprenant des fibres inorganiques assemblées sous forme de fils, ladite matrice comprenant une résine thermodurcissable, ledit matériau d'amortissement présentant les caractéristiques suivantes :

- le taux volumique de renfort fibreux dudit matériau d'amortissement est compris entre 20% et 70%, le complément à 100% étant constitué par ladite matrice et la porosité;
- ledit renfort fibreux comprend, en volume, au moins 50% de fils de fibres de silice dont la teneur massique en $SiO_2$ est supérieure à 90%;
- la porosité dudit matériau d'amortissement est comprise entre 2% et 10%, en volume.

**2.**  Plaque de dissipation selon la revendication précédente, dans laquelle la masse volumique apparente dudit matériau d'amortissement est supérieure à 1,0 g/cm$^3$ et inférieure à 2,0 g/cm$^3$.

**3.**  Plaque de dissipation selon l'une des revendications précédentes, dans laquelle la masse linéique desdits fils est supérieure ou égale à 500 tex.

**4.**  Plaque de dissipation selon l'une des revendications précédentes, dans laquelle le diamètre équivalent moyen des fibres de silice constituant lesdits fils est supérieur ou égal à 3 micromètres et/ou inférieur ou égal à 20 micromètres ;

**5.**  Plaque de dissipation selon l'une des revendications précédentes, dans laquelle ledit renfort fibreux est constitué essentiellement desdits fils de silice.

**6.**  Plaque de dissipation selon l'une des revendications précédentes, dans laquelle le renfort présente la forme d'au moins une couche d'un textile, de préférence un tissu, constitué d'un réseau de fils de chaîne parallèles, avec de préférence des fils de trame traversant transversalement ledit réseau.

**7.**  Plaque de dissipation selon la revendication précédente, dans laquelle le grammage de ladite couche de textile est supérieur ou égal à 350 g/m$^2$.

8. Plaque de dissipation selon l'une des revendications précédentes, dans laquelle ladite matrice présente, entre ladite résine et lesdits fils, des pores de largeur moyenne comprise entre 10 et 100% du diamètre équivalent moyen desdites fibres.

9. Plaque de dissipation selon l'une des revendications précédentes, dans laquelle ladite matrice comprend une résine époxy.

10. Plaque de blindage antibalistique comprenant une plaque de dissipation de l'énergie d'impact selon l'une des revendications précédentes.

11. Plaque de blindage selon la revendication précédente, comprenant en outre une plaque anti-impact constituée d'un matériau de dureté supérieure à celle du matériau d'amortissement, ladite plaque anti-impact présentant une épaisseur supérieure à 2 mm, ladite plaque anti-impact étant placée devant ladite plaque de dissipation, par rapport à la direction d'impact.

12. Plaque de blindage selon la revendication précédente, dans laquelle le matériau de la plaque anti-impact présente une dureté Vickers supérieure à 3 GPa.

13. Plaque de blindage selon l'une des deux revendications précédentes, dans laquelle la masse volumique apparente de la plaque anti-impact est inférieure à 10 g/cm$^3$.

14. Plaque de blindage selon l'une des revendications 10 à 13, dans laquelle le matériau de la plaque anti-impact est un matériau fritté comprenant des grains de carbure de silicium ou de carbure de bore ou un mélange de ces deux carbures.

15. Plaque de blindage selon la revendication précédente, dans laquelle les grains dudit matériau fritté sont liés par une matrice comprenant une phase de nitrure de silicium $Si_3N_4$ et/ou de $Si_2ON_2$ et/ou de SiAlON.

16. Plaque de blindage selon l'une des revendications 10 à 15, dans laquelle ladite plaque anti-impact est collée à ladite plaque de dissipation d'énergie au moyen d'une colle choisie parmi les colles par exemple à base de polyuréthane, de polymères époxydes ou de polymères thermoplastiques ou d'élastomères.

17. Procédé de fabrication d'un matériau d'amortissement pour plaque de dissipation selon l'une des revendications 1-9 ou d'une plaque de dissipation selon l'une des revendications 1-9, ledit procédé comprenant les étapes suivantes:

1)préparation, de préférence par tissage, d'au moins une couche fibreuse comprenant des fils de fibre de silice, de teneur massique supérieure à 90% de $SiO_2$ de manière à obtenir un renfort comprenant au moins 50% en volume desdits fils ;
2)préparation d'un mélange comprenant une résine thermodurcissable dont la viscosité mesurée à l'aide d'un Rhéomètre plan/plan de plateaux de diamètre de 20mm avec entrefer de 1mmest comprise entre 80 et 300 Pa.s pour un taux de cisaillement de 100 à 200 s$^{-1}$ à 50°C ;
3)imprégnation de chaque couche par ledit mélange et empilement de chaque couche de manière à obtenir une préforme dont le taux volumique de renfort fibreux dudit matériau d'amortissement est compris entre 20% et 70% ;
4)cuisson de la préforme dans un autoclave à pression et température contrôlée afin de polymériser et réticuler ladite résine et former un renfort lié par une matrice organique constituant ledit matériau d'amortissement.

18. Utilisation d'une plaque de dissipation selon les revendications 1 à 9 ou d'une plaque de blindage selon les revendications 10 à 16, comme protection antibalistique :

- d'une personne, ladite protection étant choisie parmi un gilet pare-balles, un casque, ou
- d'un véhicule terrestre, maritime ou aérien, ou
- d'une installation fixe choisie parmi un bâtiment, un mur d'enceinte, ou un poste de garde, ou
- d'un radôme ou d'un équipement de détection ou communication.

**Patentansprüche**

1.  Dissipationsplatte für die Aufprallenergie für eine ballistische Panzerung, wobei die Dissipationsplatte aus einem Dämpfungsmaterial gebildet ist, das aus einer Faserverstärkung gebildet ist, die durch eine organische Matrix gebunden ist, die Verstärkung umfassend anorganische Fasern, die in Form von Fäden zusammengefügt sind, die Matrix umfassend ein warmhärtbares Harz, wobei das Dämpfungsmaterial die folgenden Eigenschaften aufweist:

    - der Volumenanteil der Faserverstärkung des Dämpfungsmaterials liegt zwischen 20 % und 70 %, wobei die Ergänzung zu 100 % aus der Matrix und der Porosität gebildet ist;
    - wobei die Faserverstärkung volumenmäßig mindestens zu 50 % Siliciumdioxidfäden umfasst, deren Massengehalt an $SiO_2$ größer als 90 % ist;
    - die Porosität des besagten Dämpfungsmaterials liegt zwischen 2 Vol.-% und 10 Vol.-%.

2.  Dissipationsplatte nach dem vorstehenden Anspruch, wobei die Rohdichte des Dämpfungsmaterials größer als 1,0 $g/cm^3$ und kleiner als 2,0 $g/cm^3$ ist.

3.  Dissipationsplatte nach einem der vorstehenden Ansprüche, wobei die Feinheit der Fäden größer als oder gleich 500 tex ist.

4.  Dissipationsplatte nach einem der vorstehenden Ansprüche, wobei der mittlere äquivalente Durchmesser der Siliciumdioxidfasern, die die Fäden bilden, größer als oder gleich 3 Mikrometer und/oder kleiner als oder gleich 20 Mikrometer ist;

5.  Dissipationsplatte nach einem der vorstehenden Ansprüche, wobei die Faserverstärkung im Wesentlichen aus den Siliciumdioxidfäden gebildet ist.

6.  Dissipationsplatte nach einem der vorstehenden Ansprüche, wobei die Verstärkung die Form mindestens einer Schicht eines Textils, vorzugsweise eines Gewebes, das aus einem Netz paralleler Kettfäden gebildet ist, vorzugsweise mit Schussfäden, die das Netz quer durchlaufen, aufweist.

7.  Dissipationsplatte nach dem vorstehenden Anspruch, wobei das Flächengewicht der Textilschicht größer als oder gleich 350 $g/m^2$ ist.

8.  Dissipationsplatte nach einem der vorstehenden Ansprüche, wobei die Matrix zwischen dem Harz und den Fäden Poren mit einer mittleren Breite, die zwischen 10 und 100 % des mittleren äquivalenten Durchmessers der Fasern liegt, aufweist.

9.  Dissipationsplatte nach einem der vorstehenden Ansprüche, wobei die Matrix ein Epoxidharz umfasst.

10. Ballistische Panzerplatte, umfassend eine Dissipationsplatte für die Aufprallenergie nach einem der vorstehenden Ansprüche.

11. Panzerplatte nach dem vorstehenden Anspruch, ferner umfassend eine Aufprallschutzplatte, die aus einem Material mit einer Härte gebildet ist, die größer als die des Dämpfungsmaterials ist, wobei die Aufprallschutzplatte eine Dicke von größer als 2 mm aufweist, wobei die Aufprallschutzplatte vor der Dissipationsplatte relativ zu der Aufprallrichtung platziert ist.

12. Panzerplatte nach dem vorstehenden Anspruch, wobei das Material der Aufprallschutzplatte eine Vickers-Härte von größer als 3 GPa aufweist.

13. Panzerplatte nach einem der zwei vorstehenden Ansprüche, wobei die Rohdichte der Aufprallschutzplatte kleiner als 10 $g/cm^3$ ist.

14. Panzerplatte nach einem der Ansprüche 10 bis 13, wobei das Material der Aufprallschutzplatte ein gesintertes Material ist, umfassend Körner aus Siliciumcarbid oder Borcarbid oder eine Mischung dieser zwei Carbide.

15. Panzerplatte nach dem vorstehenden Anspruch, wobei die Körner des gesinterten Materials durch eine Matrix gebunden sind, umfassend eine Phase aus Siliciumnitrid $Si_3N_4$ und/oder $Si_2ON_2$ und/oder SiAlON.

**16.** Panzerplatte nach einem der Ansprüche 10 bis 15, wobei die Aufprallschutzplatte an die Energiedissipationsplatte mittels eines Klebstoffs geklebt ist, der aus Klebstoffen, zum Beispiel auf Basis von Polyurethan, Epoxidpolymeren oder thermoplastischen Polymeren oder Elastomeren ausgewählt ist.

**17.** Verfahren zum Fertigen eines Dämpfungsmaterials für eine Dissipationsplatte nach einem der Ansprüche 1 bis 9 oder einer Dissipationsplatte nach einem der Ansprüche 1 bis 9, das Verfahren umfassend die folgenden Schritte:

1) Herstellen, vorzugsweise durch Weben, mindestens einer Faserschicht, umfassend Siliciumdioxidfäden mit einem Massengehalt von größer als zu 90 % an $SiO_2$, um eine Verstärkung zu erhalten, umfassend zu mindestens 50 Vol.-% die Fäden;
2) Herstellen einer Mischung, umfassend ein wärmehärtbares Harz, dessen Viskosität, gemessen mittels eines Platte/Platte-Rheometer mit Platten von 20 mm Durchmesser mit einem Luftspalt von 1 mm, der zwischen 80 und 300 Pa.s für eine Scherrate von 100 bis 200 $s^{-1}$ bei 50 °C liegt;
3) Imprägnieren von jeder Schicht mit der Mischung und Stapeln von jeder Schicht, um eine Vorform zu erhalten, wobei der volumetrische Anteil an Faserverstärkung des Dämpfungsmaterials zwischen 20 % und 70 % liegt;
4) Brennen der Vorform in einem Autoklaven bei gesteuertem Druck und gesteuerter Temperatur, zum Polymerisieren und Vernetzen des Harzes und zum Ausbilden einer Verstärkung, gebunden durch organische Matrix, die das Dämpfungsmaterial bildet.

**18.** Verwendung einer Dissipationsplatte nach den Ansprüchen 1 bis 9 oder einer Panzerplatte nach den Ansprüchen 10 bis 16 als ballistischer Schutz:

- einer Person, wobei der Schutz ausgewählt ist aus einer kugelsicheren Weste, einem Helm oder
- einem terrestrischen, maritimen oder Luft-Fahrzeug oder
- einer ortsfesten Anlage, ausgewählt aus einem Gebäude, einer Umfassungsmauer oder einem Wachposten oder
- einem Radom oder einer Erfassungs- oder Kommunikationsausrüstung.

## Claims

**1.** An impact energy dissipation plate for anti-ballistic armor, said dissipation plate consisting of a damping material consisting of a fibrous reinforcement bonded by an organic matrix, said reinforcement comprising inorganic fibers assembled in the form of yarns, said matrix comprising a thermosetting resin, said damping material having the following features:

- the volume fraction of fibrous reinforcement of said damping material is between 20% and 70%, the remainder to 100% consisting of said matrix and porosity;
- the fibrous reinforcement comprises at least 50% by volume of silica fiber yarns of which $SiO_2$ content by mass is greater than 90%;
- the porosity of said damping material is between 2% and 10% by volume.

**2.** The dissipation plate according to the preceding claim, wherein the bulk density of said damping material is greater than 1.0 $g/cm^3$ and less than 2.0 $g/cm^3$.

**3.** The dissipation plate according to one of the preceding claims, wherein the linear mass of said yarns is greater than or equal to 500 tex.

**4.** The dissipation plate according to one of the preceding claims, wherein the average equivalent diameter of the silica fibers constituting said yarns is greater than or equal to 3 micrometers and/or less than or equal to 20 micrometers;

**5.** The dissipation plate according to one of the preceding claims, wherein said fibrous reinforcement consists substantially of said silica yarns.

**6.** The dissipation plate according to one of the preceding claims, wherein the reinforcement is in the form of at least one layer of a textile, preferably a woven fabric, consisting of a network of parallel warp yarns, with preferably weft yarns running transversely through said network.

7. The dissipation plate according to the preceding claim, wherein the grammage of said textile layer is greater than or equal to 350 g/m$^2$.

8. The dissipation plate according to one of the preceding claims, wherein said matrix has, between said resin and said yarns, pores with an average width of between 10 and 100% of the average equivalent diameter of said fibers.

9. The dissipation plate according to one of the preceding claims, wherein said matrix comprises an epoxy resin.

10. An anti-ballistic armor plate comprising an impact energy dissipation plate according to one of the preceding claims.

11. The armor plate according to the preceding claim, further comprising an anti-impact plate consisting of a material with a hardness greater than that of the damping material, said anti-impact plate having a thickness greater than 2 mm, said anti-impact plate being placed in front of said dissipation plate, with respect to the direction of impact.

12. The armor plate according to the preceding claim, wherein the material of the anti-impact plate has a Vickers hardness greater than 3 GPa.

13. The armor plate according to one of the two preceding claims, wherein the bulk density of the anti-impact plate is less than 10 g/cm$^3$.

14. The armor plate according to one of claims 10 to 13, wherein the material of the anti-impact plate is a sintered material comprising grains of silicon carbide or boron carbide or a mixture of these two carbides.

15. The armor plate according to the preceding claim, wherein the grains of said sintered material are bonded by a matrix comprising a phase of silicon nitride $Si_3N_4$ and/or $Si_2ON_2$ and/or SiAlON.

16. The armor plate according to one of claims 10 to 15, wherein said anti-impact plate is bonded to said energy dissipation plate by means of an adhesive selected from adhesives based, for example, on polyurethane, epoxy polymers or thermoplastic polymers or elastomers.

17. A method for manufacturing a damping material for a dissipation plate according to one of claims 1-9 or an dissipation plate according to claims 1-9, said method comprising the following steps:

1) preparing, preferably by weaving, at least one fibrous layer comprising yarns of silica fibers with a mass content greater than 90% $SiO_2$ so as to obtain a reinforcement comprising at least 50% by volume of said yarns;
2) preparing a mixture comprising a thermosetting resin of which the viscosity, measured using a 20 mm-diameter plate/plate rheometer with 1 mm air gap, is between 80 and 300 Pa.s for a shear rate of 100 to 200 s$^{-1}$ at 50°C;
3) impregnating each layer with said mixture, and stacking each layer so as to obtain a preform wherein the volume fraction of fibrous reinforcement of said damping material is between 20% and 70%;
4) curing the preform in an autoclave at controlled pressure and temperature to polymerize and crosslink said resin and form a reinforcement bonded by an organic matrix constituting said damping material.

18. Use of a dissipation plate according to claims 1 to 9 or an armor plate according to claims 10 to 16 as antiballistic protection:

- of a person, said protection being selected from a bullet-proof vest, a helmet, or
- of a land, sea or air vehicle, or
- of a stationary installation chosen from a building, a perimeter wall or a guardhouse, or
- of a radome or of detection or communication equipment.

[Fig. 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2013220106 A1
- WO 9108895 A2
- WO 2013186453 A1
- EP 1710218 A1
- WO 2008130451 A
- EP 2095055 A1
- US 20130220106 A1